# EUROPÄISCHE PATENTSCHRIFT

(11) **EP 1 611 406 B1**
(45) Veröffentlichungstag und Bekanntmachung des Hinweises auf die Patenterteilung: **15.09.2010**
(21) Anmeldenummer: 04721497.8
(22) Anmeldetag: 18.03.2004
(51) Int. Cl.: F28F 3/02

(54) **WÄRMEÜBERTRAGER, INSBESONDERE LUFT/LUFT-KÜHLER**
HEAT EXCHANGER, IN PARTICULAR AIR/AIR COOLER
ECHANGEUR DE CHALEUR, EN PARTICULIER REFROIDISSEUR AIR/AIR

(30) Priorität: 26.03.2003 DE 10313684; 05.06.2003 DE 10325763
(43) Veröffentlichungstag der Anmeldung: 04.01.2006
(73) Patentinhaber: Behr Industry GmbH & Co. KG, 70469 Stuttgart (DE)
(72) Erfinder: ROTHENHÖFER, Horst, 74348 Lauffen (DE); SPANEY, Philipp, 70469 Stuttgart (DE)
(74) Vertreter: Grauel, Andreas
(86) Internationale Anmeldenummer: PCT/EP2004/002802
(87) Internationale Veröffentlichungsnummer: WO 2004/085947

(56) Entgegenhaltungen:
- DE-A- 10 102 088
- DE-A- 19 519 633
- DE-U- 20 003 919
- US-A- 3 542 124
- US-A- 3 613 782
- US-A- 4 049 051

## Beschreibung

Die Erfindung betrifft einen Wärmeübertrager, insbesondere einen Luft/LuftKühler nach dem Oberbegriff des Patentanspruches 1.

Solche Wärmeüberträger sind durch die DE-C 195 19 633 und DE-A 10 102 088 bekannt geworden.

Luft/Luft-Kühler, insbesondere luftgekühlte Ladeluftkühler werden meistens in Kreuzstrombauweise hergestellt, wobei die Strömungskanäle für das zu kühlende Gas, z. B. die Ladeluft eines Verbrennungsmotors, endseitig mit Sammelkästen, so genannten Luftkästen verbunden sind. Es sind im Wesentlichen zwei Bauweisen für derartige Kühler bekannt, nämlich seinerseits eine Flachrohrbauweise, bei welcher der Kühlerblock aus Flachrohren und zwischen diesen angeordneten Wellrippen aufgebaut ist, z. B. gemäß der DE-A 196 51 625. Andererseits ist eine so genannte Paketbauweise bekannt, bei welcher die Strömungskanäle für beide Medien durch aufeinander gestapelte Scheibenbleche (ebene Platten) gebildet werden, zwischen denen Wellrippen und seitliche Abschlussleisten angeordnet sind. Der gesamte Block wird anschließend verlötet.

Ein Problem dieser Luft/Luft-Kühler sind die thermischen Spannungen, die sich aufgrund der hohen und schnell wechselnden Temperaturunterschiede beider Medien ergeben. Beispielsweise ist der Kühlvorgang bei der Abkühlung von Ladeluft für Verbrennungsmotoren durch Umgebungsluft stark instationär, wobei kurzzeitig wechselnde Temperaturunterschiede von 100 bis 200 Grad Celsius auftreten können. Insbesondere im Eintrittsbereich der Rohre oder Strömungskanäle für das zu kühlende Gas, also die Ladeluft, ergeben sich aufgrund der hohen Temperaturunterschiede Dehnungen, die zu Rissen oder Undichtigkeiten des Kühlers führen können.

In der DE-C 195 19 633 der Anmelderin wurde für einen wassergekühlte Ladeluftkühler zur Vermeidung von thermisch bedingten Dehnungen vorgeschlagen, Dehnungsfugen auf der Lufteinstrittsseite vorzusehen, wodurch die Ausdehnung der Wellrippen in Querrichtung teilweise kompensiert wurde. Andererseits wurde zur Vermeidung von Dampfblasenbildung und Heißkorrosion in den Kühlwasser führenden Flachrohren vorgeschlagen, die Berippung im Eintrittsbereich der Luftkanäle derart zu dimensionieren, dass in diesem Bereich weniger Wärme von der heißen Ladeluft auf das Kühlwasser übertragen wurde, beispielsweise durch eine glatte Rippe im Lufteintrittsbereich und eine geschlitzte Wellrippe hinter dem Eintrittsbereich. Diese Maßnahmen wurden für einen flüssigkeitsgelcühlten Ladeluftkühler in Flachrohrbauweise vorgeschlagen, d. h. ausschließlich auf der Ladeluftseite.

Aufgabe der vorliegenden Erfindung ist es, einen Wärmeübertrager der eingangs genannten Art, insbesondere einen luftgekühlten Ladeluftkühler derart zu verbessern, dass thermisch bedingte Spannungen abgebaut und damit Risse und Undichtigkeiten im Kühler vermieden werden.

Diese Aufgabe wird durch die Merkmale des Patentanspruches 1 gelöst. Erfindungsgemäß sind in den Eintrittsbereichen der ersten Strömungskanäle, d. h. der Strömungskanäle für das heiße, zu kühlende Gas, z. B. die Ladeluft Mittel vorgesehen, die die Wärmeübertragung in diesem Eintrittsbereich behindern. Im Eintrittsbereich, wo das abzukühlende Medium am heißesten ist, wird also weniger Wärme als im übrigen Bereich des Strömungskanals an die benachbarten Strömungskanäle mit dem Kühlmedium, z. B. Luft übertragen. Durch diese Maßnahme können die durch instationäre Kühlvorgänge hervorgerufenen Spannungsspitzen nachweislich abgebaut werden.

In den ersten Strömungskanälen sind zwei verschieden Arten von Wellrippen, so genannte Innenwellrippen angeordnet, wobei die Innenwellrippe im Eintrittsbereich derart bemessen ist, dass sie weniger Wärme aus ihre Umgebung aufnimmt, beispielsweise aufgrund einer geringeren Wärmeübergangszahl, was z. B. durch eine geringere Rippendichte oder eine glatte Oberfläche erreicht werden kann. Außerdem besitzt die Innenwellrippe im Eintrittsbereich eine höhere Wärmeleitfähigkeit und eine höhere Biegesteifigkeit. Die an den Eintrittsbereich anschließende Wellrippe ist dagegen als Hochleistungsrippe ausführt, d. h. mit Kiemen besetzt und mit hoher Ripppendichte und nimmt somit ein Maximum an Wärme auf, daß sie an die benachbarten Kühlkanäle abgibt. Damit werden Überhitzungen der Eintrittsbereiche der Kühlkanäle und infolgedessen erhöhte Spannungsspitzen vermieden.

Nach einer weiteren vorteilhaften Ausgestaltung der Erfindung ist der Block des Wärmeübertragers in einer an sich bekannten Paketbauweise hergestellt, d. h. die Strömungskanäle für beide gasförmigen Medien sind ähnlich, nämlich durch ebene Platten und in Längsrichtung verlaufende Profil- oder Abschlussleisten begrenzt, wobei sich in den Strömungskanälen Innentellrippen oder Turbulenzeinlagen befinden. Bei dieser Bauweise erweisen sich die erfindungsgemäßen Maßnahmen als besonders vorteilhaft.

In weiterer Ausgestaltung der Erfindung sind in den zweiten Strömungskanälen, in welchen das gasförmige Kühlmedium, z. B. Luft strömt, Dehnfugen vorgesehen - die an sich aus dem eingangs genannten Stand der Technik bekannt sind. Hier sind die Dehnfugen, die etwa benachbart zum Eintrittsbereich der ersten Strömungskanäle für das zu kühlende Medium angeordnet sind, als zusätzliche Maßnahmen vorgesehen. Dadurch werden eine Querdehnung der Wellrippen im Bereich der Dehnfugen kompensiert und Spannungen abgebaut.

In weiterer Ausgestaltung der Erfindung sind beiderseits der Dehnfugen Rippen geringerer Höhe, z. B. in Form von Turbulenzeinlagen angeordnet, sodass eine Vergrößerung der Wärmeaustauschfläche auch im Bereich der Dehnfuge gegeben ist. Somit kann auch im Bereich der Dehnfuge ein hinreichender Wärmeaustausch zwischen beiden benachbarten Strömungskanälen stattfinden.

Nach einer weiteren vorteilhaften Ausgestaltung der Erfindung ist im Eintrittsbereich der ersten Strömungskanäle für das zu kühlende (heiße) Gas eine höhere Wandstärke vorgesehen, wodurch die Steifigkeit erhöht wird. Eine größere Wandstärke kann vorteilhafterweise durch Einsetzen einer Hülse in den Eintrittsbereich erreicht werden.

Ein Ausführurigsbeispiel der Erfindung ist in der Zeichnung dargestellt und wird im Folgenden näher beschrieben. Es zeigen
- Fig. 1: einen Luft/Luft-Kühler mit zwei Dehnfugen,
- Fig. 2: einen Schnitt entlang der Linie II-II durch den Kühler gemäß Fig. 1,
- Fig. 3: einen Schnitt entlang der Linie III-III durch den Kühler gemäß Fig. 2,
- Fig. 4: eine so genannte Turbulenzeinlage für den Bereich der Dehnfuge,
- Fig. 5: eine geschlitzte Innenwellrippe und
- Fig. 6: eine glatte Innenwellrippe.

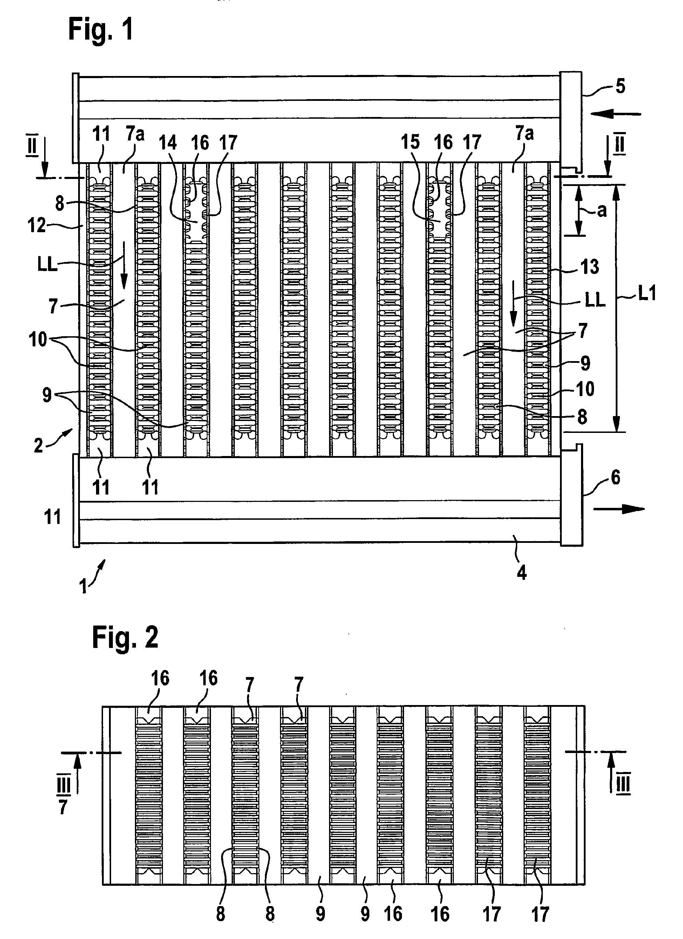

**Fig. 1** zeigt einen Wärmeübertrager als luftgekühlten Ladeluftkühler 1, der zur Kühlung von Ladeluft bei Verbrennungsmotoren durch Umgebungsluft eingesetzt werden kann. Dieser Wärmeüberträger 1 kann jedoch auch für andere Zwecke, bei welchen ein heißes gasförmiges Medium von einem anderen gasförmigen Medium gekühlt werden soll, verwendet werden. Der Ladeluftkühler 1 weist einen Block 2 auf, der in so genannter Paketbauweise hergestellt ist, und zwei Sammelkästen 3, 4, die auf den Block aufgesetzt und mit diesen dicht, z. B. durch Schweißung verbunden sind. Der obere Sammelkasten 3, auch Luftkasten genannt, weist eine Eintrittsöffnung 5 auf, durch welche ein zu kühlendes Gas, d. h. z. B. die Ladeluft für einen nicht dargestellten Verbrennungsmotor eintritt. Der untere Sammelkasten 4 weist eine Austrittsöffnung 6 auf, aus welcher das abgekühlte Gas wieder aus dem Kühler 1 austritt. Die Sammelkästen 3, 4 sind durch erste Strömungskanäle 7, die das zu kühlende Gas führen, verbunden. Die Strömungskanäle 7 sind beiderseits durch ebene Platten 8 begrenzt, die vom oberen Sammelkasten 3 bis zum unteren Sammelkasten 4 reichen. Das zu kühlende Gas strömt also von oben nach unten, was durch Pfeile LL (Ladeluft) angedeutet ist. Zwischen den bzw. benachbart zu den ersten Strömungskanälen 7 sind zweite Strömungskanäle 9 angeordnet, welche von einem zweiten Gas, einem Kühlmittel, z. B. Umgebungsluft durchströmt werden. Zur Verbesserung des Wärmeüberganges sind in den zweiten Strömungskanälen 9 Wellrippen 10 angeordnet, die sich über die gesamte Breite der zweiten Strömungskanäle 9 erstrecken. Die Strömungsrichtung des kühlenden Gases verläuft senkrecht zur Zeichenebene. Erstes und zweites Gas strömen somit im Kreuzstrom zueinander. Die zweiten Strömungskanäle 9 sind an ihren Längsseiten, d. h. angrenzend an den oberen Sammelkasten 3 und den unteren Sammelkasten 4 durch Profil- oder Abschlussleisten 11 begrenzt. Somit sind die zweiten Strömungskanäle 9 jeweils durch zwei Platten 8 und zwei Profilleisten 11 begrenzt und weisen einen rechteckförmigen Querschnitt auf, der durch die Wellrippen 9 ausgefüllt ist. Der Block 2 ist seitlich durch je ein Seitenteil 12, 13 begrenzt. Der Ladeluftkühler 1 weist insgesamt zehn zweite Strömungskanäle, d. h. Luftkanäle 9 auf, von denen zwei Strömungskanäle (der 3. und der 8.) jeweils eine Dehnfuge 14, 15 aufweisen, die sich in Strömungslängsrichtung erstreckt und eine Breite a aufweist. Die beiden Dehnfugen 14, 15 sind also benachbart zu den Eintrittsbereichen 7a der Ladeluftkanäle 7 angeordnet. Beiderseits der Dehnfugen 14, 15 sind auf den Platten 8 Rippen 16, 17 geringerer Höhe, d. h. so genannte Turbulenzeinlagen angeordnet. Der Rippenverband ist somit im Bereich der Dehnfugen 14,15 unterbrochen, und die sich gegenüberliegenden Platten 8 sind entkoppelt.

**Fig. 2** zeigt einen Schnitt längs der Linie II-II durch den Ladeluftkühler 1 in Fig. 1. Im Folgenden werden für gleiche Teile dieselben Bezugszahlen verwendet. Die ersten Strömungskanäle 7 sind - wie bereits erwähnt - durch die ebenen Platten 8 und in Strömungslängsrichtung auf der Schmalseite durch Profil- bzw. Abschlussleisten 16 begrenzt. Der Querschnitt der Strömungskanäle 7, in welchen die Ladeluft - bezogen auf die Zeichnungsebene - von oben nach unten strömt, ist durch Innenwellrippen 17 zur Verbesserung des Wärmeübergangs ausgefüllt. Sämtliche Teile des Kühlerblockes 2, also die Platten 8, die Wellrippen 10, die Abschlussleisten 11, 16, die Innenwellrippe 17 sowie die Seitenteile 12, 13 sind vorzugsweise aus Aluminiumlegierungen hergestellt und werden nach dem Aufeinanderschichten miteinander verlötet. Danach werden auf den gelöteten Kühlerblock 2 die Sammelkästen 3, 4 aufgeschweißt.

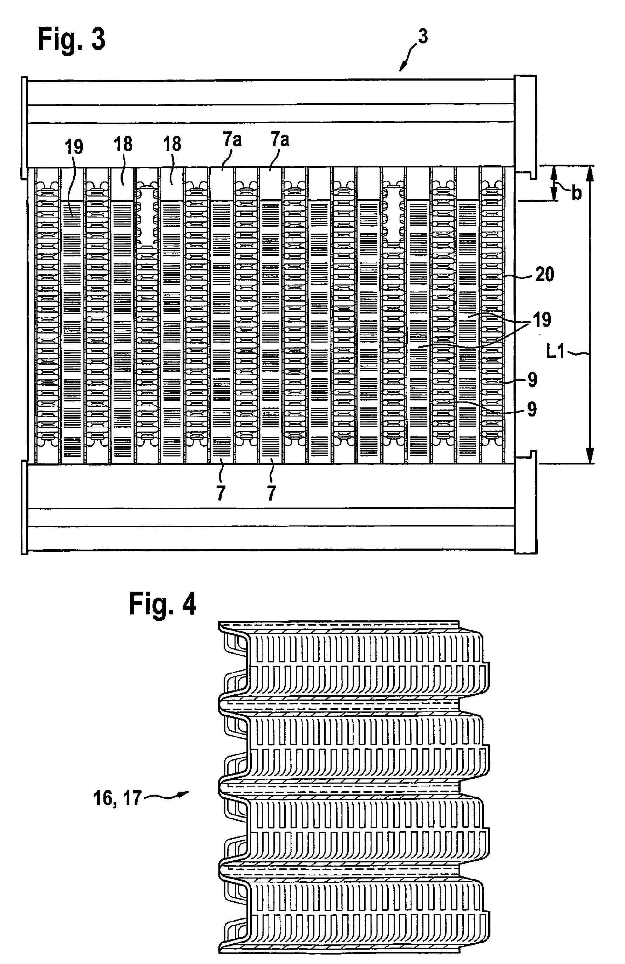

**Fig. 3** zeigt einen Schnitt längs der Linie III-III durch den Kühler in Fig. 2. Die Darstellung des Ladeluftkühlers 1 entspricht der in Fig. 1, allerdings sind hier in den ersten Strömungskanälen 7 für die Ladeluft Wellrippen eingezeichnet, und zwar sind in den Eintrittsbereichen 7a erste Innenwellrippen 18 angeordnet, die sich bis zu einer Tiefe b in Strömungsrichtung LL der Ladeluft erstrecken. In Strömungsrichtung hinter den ersten Innenwellrippen 18 sind zweite Innenwellrippen 19 angeordnet, die sich über den Rest der Gesamtlänge L1 der Strömungskanäle 7 erstrecken. Die erste Innenwellrippe 18 unterscheidet sich von der zweiten Innenwellrippe 19 durch eine geringere Wärmeübertragungsfähigkeit, d. h. z. B. durch eine geringere Wärmeübergangszahl infolge einer glatten Oberfläche oder durch eine geringere Rippendichte. Die zweite Innenwellrippe 19 ist als Hochleistungswellrippe gestaltet, d. h. ihre Oberfläche ist geschlitzt und mit Kiemenfeldern 20 zur Erhöhung des Wärmeaustausches besetzt. Infolge dieser unterschiedlich ausgelegen Innenwellrippen 18, 19 ergibt sich in den Eintrittsbereichen 7a der Ladeluftkänäle 7 ein geringerer Wärmeübergang an die Umgebung, die damit weniger stark aufgeheizt wird. Nach Durchströmen der Strecke b hat die Ladeluft bereits eine geringere Temperatur erreicht und trifft dann auf die Hochleistungswellrippe 19, wo ein maximaler Wärmeaustausch mit den benachbarten Kühlkanälen 9 stattfinden kann.

**Fig. 4** zeigt eine so genannte Turbulenzeinlage 16, 17, wie sie in Fig. 1 im Bereich der Dehnfugen 14, 15 dargestellt ist, in vergrößerter Darstellung. Dabei handelt es sich um eine bekannte Konfiguration einer trapezförmig ausgebildeten Wellrippe mit geschlitzten Seitenflanken, die die Strömung ständig neu aufbrechen und damit für eine erhöhte Turbulenz sorgen.

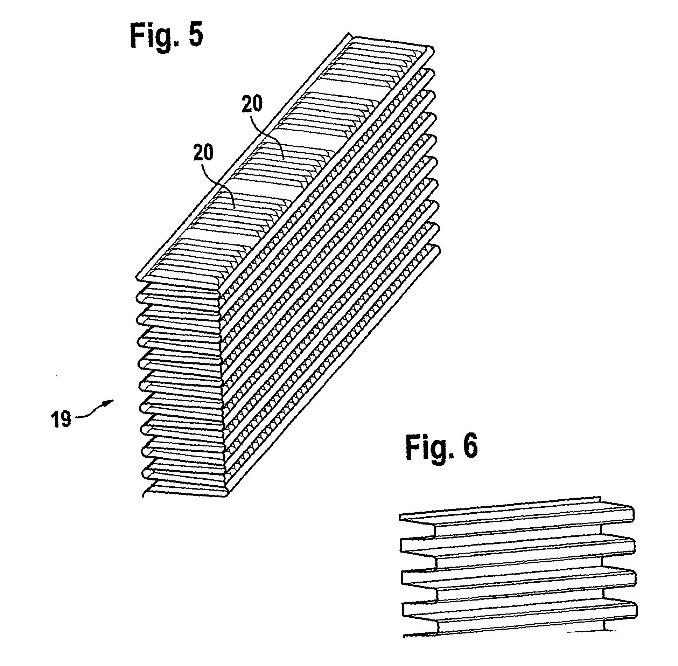

**Fig. 5** zeigt die so genannte Hochleistungswellrippe 19, wie sie in Fig. 3 dargestellt ist - hier in vergrößerter perspektivischer Ansicht, wobei die Kiemenfelder 20 deutlich erkennbar sind. Zur Variation der Wärmeübertragungsfähigkeit können die Zahl der Kiemen, die Winkel der Kiemen und die Rippendichte variiert werden.

**Fig. 6** zeigt die Innenwellrippe 18, wie sie in Fig. 3 in den Eingangsbereichen 7a der Ladeluftkanäle 7 angeordnet ist, d. h. eine Innenwellrippe, die im Vergleich zu der Hochleistungswellrippe gemäß Fig. 5 eine geringere Wärmeübertragungsfähigkeit, insbesondere eine geringere Wärmeübergangszahl besitzt. Dies geht unmittelbar aus der glatten Oberfläche und der geringeren Rippendichte hervor.

### Bezugszahlen

- 1: Ladeluftkühler
- 2: Kühlerblock
- 3: oberer Sammelkasten
- 4: unterer Sammelkasten
- 5: Eintrittsöffnung
- 6: Austrittsöffnung
- 7: erste Strömungskanäle
- 8: Platten
- 9: zweite Strömungskanäle
- 10: Wellrippen
- 11: Abschlussleisten
- 12: Seitenteil
- 13: Seitenteil
- 14: Dehnfuge
- 15: Dehnfuge
- 16: Abschlussleisten
- 17: Innenwellrippe
- 18: erste Innenwellrippe
- 19: zweite Innenwellrippe
- 20: Kiemenfeld

## Patentansprüche

1. Wärmeübertrager, insbesondere luftgekühlter Luftkühler, bestehend aus einem Block (2) mit im Kreuzstrom zueinander angeordneten ersten und zweiten Strömungskanälen (7, 9) für ein erstes zu kühlendes gasförmiges Medium und ein zweites kühlendes gasförmiges Medium, wobei die ersten Strömungskanäle (7) ein- und austrittsseitig mit auf den Block (2) aufgesetzten Sammelkästen (3, 4) verbunden sind und in den zweiten Strömungskanälen (9) Rippen (10) angeordnet sind, und in den ersten Strömungskanälen (7) Wärmeübertragungsmittel angeordnet sind, wobei die Wärmeübertragungsmittel als Innenwellrippen ausgebildet sind, **dadurch gekennzeichnet, dass** die Wärmeübertragungsmittel im Eintrittsbereich (7a) eine geringere Wärmeübertragungsfähigkeit aufweisen als im anschließenden Bereich, und dass im Eintrittsbereich (7a) eine erste Innenwellrippe (18) und im übrigen Bereich eine zweite Innenwellrippe (19) angeordnet ist, wobei weiterhin die ersten Strömungskanäle (7) eine Länge L1 und der Eintrittsbereich (7a) eine Tiefe b aufweisen und dass die Tiefe b folgenden Bereich aufweist: 0,1 L1 ≤ b ≤ 0,2 L1.

2. Wärmeübertrager nach Anspruch 1, **dadurch gekennzeichnet, dass** die erste Innenwellrippe (18) eine geringere Wärmeübergangszahl als die zweite Innenwellrippe (19) aufweist.

3. Wärmeübertrager nach Anspruch 1 oder 2, **dadurch gekennzeichnet, dass** die erste Innenwellrippe (18) eine höhere Wärmeleitfähigkeit als die zweite Innenwellrippe (19) aufweist.

4. Wärmeübertrager nach Anspruch 1 oder 2, **dadurch gekennzeichnet, dass** die erste Innenwellrippe (18) eine glatte, ungeschlitzte Oberfläche und die zweite Innenwellrippe eine mit Kiemen (20) besetzte Oberfläche aufweist.

5. Wärmeübertrager nach einem der Ansprüche 1 bis 4, **dadurch gekennzeichnet, dass** die erste Innenwellrippe (18) eine geringere Rippendichte als die zweite Innenwellrippe (19) aufweist.

6. Wärmeübertrager nach einem der Ansprüche 1 bis 5, **dadurch gekennzeichnet, dass** die erste Innenwellrippe (18) eine höhere Biegesteifgigkeit als die zweite Innenwellrippe (19) aufweist.

7. Wärmeübertrager nach einem der Ansprüche 1 bis 6, **dadurch gekennzeichnet, dass** der Block (2) in Paketbauweise hergestellt ist, d. h. die ersten und zweiten Strömungskanäle (7, 9) aus ebenen Platten (8) und längsseitigen Abschlussleisten (11, 16) gebildet sind.

8. Wärmeübertrager nach einem der Ansprüche 1 bis 7, **dadurch gekennzeichnet, dass** die zweiten Strömungskanäle (9) mindestens teilweise Dehnfugen (14, 15), benachbart zu den Eintrittsbereichen (7a) der ersten Strömungskanäle (7), aufweisen, die sich in Strömungslängsrichtung der zweiten Strömungskanäle (9) erstrecken.

9. Wärmeübertrager nach Anspruch 8, **dadurch gekennzeichnet, dass** die Dehnfugen (14, 15) quer zur Strömungslängsrichtung eine Breite a aufweisen, und daß die Breite a im folgenden Bereich liegt: 0,05 L1 < a <= L1.

10. Wärmeübertrager nach Anspruch 8 oder 9, **dadurch gekennzeichnet, dass** beiderseits der Dehnfuge (14, 15) flache Rippenelemente (16, 17) im zweiten Strömungskanal (9) angeordnet sind.

11. Wärmeübertrager nach Anspruch 1, 7, 8, 9 oder 10, **dadurch gekennzeichnet, dass** die ersten Strömungskanäle (7) im Eintrittsbereich (7a) eine verstärkte Wandstärke aufweisen.

12. Wärmeübertrager nach Anspruch 11, **dadurch gekennzeichnet, dass** die Wandstärke durch eine im Eintrittsbereich (7a) eingesetzte Hülse verstärkt ist.

## Claims

1. A heat exchanger, particularly an air-cooled air cooler, comprising a block (2) having first and second flow channels (7, 9) disposed at a cross flow relative to each other for a first gaseous medium to be cooled and a second gaseous cooling medium, the first flow channels (7) being connected on the inlet and outlet sides to headers (3, 4) that are placed on the block (2), ribs (10) being disposed in the second flow channels (9), and heat transfer means being disposed in the first flow channels (7) and the heat transfer means being configured as inside undulated ribs, **characterized in that** heat the heat transfer means in the inlet region (7a) have a lower thermal conductivity than in the subsequent region, and that in the inlet region (7a) a first inside undulated ribs (18) and in the remaining region a second inside undulated rib (19) are disposed, wherein furthermore the first flow channels (7) have a length L1 and the inlet region (7a) has a depth b, and the depth b has the following range: 0.1 L1 ≤ b ≤ 0.2 L1.

2. The heat exchanger according to claim 1, **characterized in that** the first inside undulated rib (18) has a lower heat transmission coefficient than the second inside undulated rib (19).

3. The heat exchanger according to claim 1 or 2, **characterized in that** the first inside undulated rib (18) has a higher thermal conductivity than the second inside undulated rib (19).

4. The heat exchanger according to claim 1 or 2, **characterized in that** the first inside undulated rib (18) has a smooth, non-slotted surface and the second inside undulated rib has a surface equipped with louvers (20).

5. A heat exchanger according to any one of claims 1 to 4, **characterized in that** the first inside undulated rib (18) has a lower rib density than the second inside undulated rib (19).

6. A heat exchanger according to any one of claims 1 to 5, **characterized In that** the first inside undulated rib (18) has a higher flexural rigidity than the second inside undulated rib (19).

7. A heat exchanger according to any one of claims 1 to 6, **characterized in that** the block (2) is produced in a package design, which is to say, the first and second flow channels (7, 9) are formed by planar plates (8) and longitudinal end strips (11, 16).

8. A heat exchanger according to any one of claims 1 to 7, **characterized in that** the second flow channels (9) at least in some sections comprise expansion joints (14, 15) that are adjacent to the inlet regions (7a) of the first flow channels (7) and extend in the longitudinal flow direction of the second flow channels (9).

9. The heat exchanger according to claim 8, **characterized in that** the expansion joints (14, 15) transversely to the longitudinal flow direction have a width a, and that the width a has the following range: 0.05 L1 < a <= L1.

10. The heat exchanger according to claim 8 or 9, **characterized in that** on either side of the expansion joint (14, 15) flat rib elements (16, 17) are disposed in the second flow channel (9).

11. The heat exchanger according to claim 1, 7, 8, 9 or 10, **characterized in that** the first flow channels (7) have a reinforced wall thickness in the inlet region (7a).

12. The heat exchanger according to claim 11, **characterized in that** the wall thickness is reinforced by a sleeve inserted in the inlet region (7a).

## Revendications

1. Echangeur de chaleur, en particulier refroidisseur à air refroidi par air, se composant d'un bloc (2) comprenant des premiers et des deuxièmes conduits d'écoulement (7, 9) disposés dans un flux croisé, les uns par rapport aux autres, pour un premier milieu gazeux à refroidir et un deuxième milieu gazeux à refroidir, où les premiers conduits d'écoulement (7) sont raccordés, côté entrée et sortie, à des bacs collecteurs (3, 4) montés sur le bloc (2), et des ailettes (10) sont disposées dans les deuxièmes conduits d'écoulement (9), et des moyens de transfert de chaleur sont disposés dans les premiers conduits d'écoulement (7), où les moyens de transfert de chaleur sont configurés comme des ailettes ondulées intérieures,
**caractérisé en ce que** les moyens de transfert de chaleur présentent une capacité de transfert de chaleur plus faible dans la zone d'entrée (7a) que dans la zone qui suit, et **en ce qu'**une première ailette ondulée intérieure (18) est disposée dans la zone d'entrée (7a), une deuxième ailette ondulée intérieure (19) étant disposée dans l'autre zone, où, en outre, les premiers conduits d'écoulement (7) présentent une longueur L1, et la zone d'entrée (7a) une profondeur b, et **en ce que** la profondeur b présente une zone suivante 0,1 L1 ≤ b ≤ 0,2 L1.

2. Echangeur de chaleur selon la revendication 1, **caractérisé en ce que** la première ailette ondulée intérieure (18) présente un coefficient de transfert de chaleur plus faible que la deuxième ailette ondulée intérieure (19).

3. Echangeur de chaleur selon la revendication 1 ou 2, **caractérisé en ce que** la première ailette ondulée intérieure (18) présente une conductivité thermique plus élevée que la deuxième ailette ondulée intérieure (19).

4. Echangeur de chaleur selon la revendication 1 ou 2, **caractérisé en ce que** la première ailette ondulée intérieure (18) présente une surface lisse non fendue, la deuxième ailette ondulée intérieure présentant une surface occupée par des ouïes (20).

5. Echangeur de chaleur selon l'une quelconque des revendications 1 à 4, **caractérisé en ce que** la première ailette ondulée intérieure (18) présente une densité d'ailettes plus faible que la deuxième ailette ondulée intérieure (19).

6. Echangeur de chaleur selon l'une quelconque des revendications 1 à 5, **caractérisé en ce que** la première ailette ondulée intérieure (18) présente une plus grande rigidité à la flexion que la deuxième ailette ondulée intérieure (19).

7. Echangeur de chaleur selon l'une quelconque des revendications 1 à 6, **caractérisé en ce que** lie bloc (2) est fabriqué en paquets, c'est-à-dire que les premiers et les deuxièmes conduits d'écoulement (7, 9) sont formés par des plaques (8) planes et par des baguettes de fermeture (11, 16) sur les grands côtés.

8. Echangeur de chaleur selon l'une quelconque des revendications 1 à 7, **caractérisé en ce que** les deuxièmes conduits d'écoulement (9) présentent au moins partiellement, de façon adjacente aux zones d'entrée (7a) des premiers conduits d'écoulement (7), des joints de dilatation (14, 15) qui s'étendent dans la direction longitudinale d'écoulement des deuxièmes conduits d'écoulement (9).

9. Echangeur de chaleur selon la revendication 8, **caractérisé en ce que** les joints de dilatation (14, 15) présentent une largeur a, transversalement par rapport à la direction longitudinale d'écoulement, et **en ce que** la largeur a se trouve dans la zone suivante : 0,05 L1 ≤ a ≤ L1.

10. Echangeur de chaleur selon la revendication 8 ou 9, **caractérisé en ce que**, des deux côtés des joints de dilatation (14, 15), des éléments d'ailettes plats (16, 17) sont disposés dans le deuxième conduit d'écoulement (9).

11. Echangeur de chaleur selon la revendication 1, 7, 8, 9 ou 10, **caractérisé en ce que** les premiers conduits d'écoulement (7) présentent une épaisseur de paroi renforcée, dans la zone d'entrée (7a).

12. Echangeur de chaleur selon la revendication 11, **caractérisé en ce que** l'épaisseur de paroi est renforcée par une douille introduite dans la zone d'entrée (7a).
